# EUROPÄISCHE PATENTSCHRIFT

(11) **EP 3 019 294 B1**
(45) Veröffentlichungstag und Bekanntmachung des Hinweises auf die Patenterteilung: **19.05.2021**
(21) Anmeldenummer: 14739041.3
(22) Anmeldetag: 03.07.2014
(51) Int. Cl.: B23C 3/34, B23C 5/08, B23D 45/10, B23P 9/02, C23C 4/04, C23C 4/02, F02F 1/18, F02B 7/02

(54) **VERFAHREN ZUM BEARBEITEN EINER LAUFFLÄCHE EINES ZYLINDERS EINES VERBRENNUNGSMOTORS**
METHOD FOR WORKING A RUNNING SURFACE OF A CYLINDER OF AN INTERNAL COMBUSTION ENGINE
PROCÉDÉ D'USINAGE DE LA SURFACE DE CONTACT D'UN CYLINDRE D'UN MOTEUR À COMBUSTION INTERNE

(30) Priorität: 12.07.2013 DE 102013011726
(43) Veröffentlichungstag der Anmeldung: 18.05.2016
(73) Patentinhaber: Bayerische Motoren Werke Aktiengesellschaft, 80809 München (DE); Hoffmann GmbH Qualitätswerkzeuge, 81241 München (DE); Technische Universität München, 80333 München (DE)
(72) Erfinder: HAHN, Karlheinz, 94135 Straubing (DE); WAGENER, Wolfram, 84144 Geisenhausen (DE); WOISETSCHLAEGER, Patrick, 84028 Landshut (DE)
(74) Vertreter: Zeitler Volpert Kandlbinder Patentanwälte Partnerschaft mbB
(86) Internationale Anmeldenummer: PCT/EP2014/001843
(87) Internationale Veröffentlichungsnummer: WO 2015/003790

(56) Entgegenhaltungen:
- EP-A1- 1 868 054
- DE-A1-102010 054 392
- DE-A1-102011 055 210
- DE-A1-102012 214 566
- DE-B3-102009 027 200
- US-A- 2 166 923
- US-A- 2 949 064
- US-A1- 2005 064 146

## Beschreibung

Die Erfindung betrifft ein Verfahren zum Bearbeiten einer Lauffläche eines Zylinders eines Verbrennungsmotors. Insbesondere betrifft die Erfindung ein Verfahren zum Beschichten der Lauffläche, wobei diese zuvor aufgeraut wird, um die Haftung der Beschichtung zu verbessern.

Verbrennungsmotoren in Kraftfahrzeugen werden aus Gewichtsgründen regelmäßig mit einem Zylinderkurbelgehäuse aus Leichtmetall, insbesondere Aluminium, ausgebildet. Problematisch daran ist jedoch, dass die Innenwände der von dem Zylinderkurbelgehäuse ausgebildeten Zylinder wegen der tribologischen Eigenschaften des Leichtmetalls, insbesondere der vergleichsweise schlechten Verschleißfestigkeit, nur unzureichend als Laufflächen für die Kolben geeignet sind.

Um diese Problematik zu vermeiden, werden in vielen Verbrennungsmotoren mit einem Zylinderkurbelgehäuse aus Leichtmetall Laufbuchsen aus z.B. Grauguss eingesetzt, wodurch die Vorteile des Leichtmetalls (geringes spezifisches Gewicht) mit denjenigen des Graugusses (gute tribologische Eigenschaften) kombiniert werden können.

Alternativ dazu ist es bekannt, die Laufflächen des Leichtmetall-Zylinderkurbelgehäuses mit einer Beschichtung zu versehen, um die gewünschten tribologischen Eigenschaften für die Laufflächen zu realisieren. Die Beschichtung wird dabei regelmäßig durch Aufschmelzen des Beschichtungswerkstoffs und Aufspritzen auf die Zylinderwände realisiert.

Von besonderer Bedeutung bei der Beschichtung von Zylinderwänden ist, eine gute Haftung der Beschichtung auf dem Grundwerkstoff zu realisieren. Hierzu ist es bekannt, die Laufflächen des Zylinderkurbelgehäuses vor dem Beschichten aufzurauen, um die Kontaktfläche zwischen den Schichten zu erhöhen. Vielfach wird dabei auch versucht, Hinterschnitte in der aufgerauten Lauffläche auszubilden, in die der aufgeschmolzene Werkstoff der Beschichtung eindringen kann, um nach dem Aushärten eine formschlüssige Verbindung zwischen den Schichten zu realisieren.

Eine bekannte Möglichkeit zum Aufrauen der Zylinderwände liegt in dem spanenden oder spanlosen Einbringen von Nuten oder Rillen.

So ist es beispielsweise aus der DE 10 2009 027 200 B3 bekannt, in einem ersten Verfahrensschritt zum Aufrauen einer Zylinderwand eine spiralförmige Nut mit insbesondere rechteckigem oder trapezförmigem Querschnitt in die Zylinderwand einzubringen. Dies kann sowohl spanend als auch spanlos erfolgen. In einem zweiten Schritt wird daraufhin der zwischen der Nut spiralförmig verlaufende Steg abschnittsweise radial plastisch verformt, um Hinterschnitte auszubilden. Zum Einbringen der Nut wird ein Werkzeug eingesetzt, das eine einzelne Schneide aufweist, wobei das Werkzeug sowohl rotierend angetrieben als auch axial entlang der Längsachse des Zylinders verfahren wird.

Ein ähnliches Verfahren ist aus der EP 2 112 359 A1 bekannt. Dort ist zudem offenbart, anstelle einer spiralförmigen Nut eine Vielzahl von in Umfangsrichtung verlaufenden Nuten in die Zylinderwand einzubringen.

Aus der DE 10 2012 214566 A1 ist ein Verfahren zur Vorbereitung einer Oberfläche zum mechanischen Befestigen eines Spritzüberzugs an einer Oberfläche bekannt. Eine erste Reihe von Rillen, die in der Oberfläche gebildet sind, wird von einer zweiten Reihe von Rillen, die in der Oberfläche gebildet sind, geschnitten. An den Schnittpunkten werden mehrere Spitzen gebildet. Der Spritzüberzug wird mechanisch an den Spitzen, die über die erste Reihe von Rillen ragen, befestigt. Die Oberfläche umfasst die erste Reihe von Rillen und die zweite Reihe von Rillen, die die erste Reihe von Rillen schneidet. Die zweite Reihe von Rillen bildet an den Schnittpunkten der Rillen einen unterschnittenen Abschnitt, oder eine Spitze, der bzw. die den Spritzüberzug mechanisch verankert. Das Verfahren dieses Dokuments umfasst somit die Merkmale des Oberbegriffs des unabhängigen Anspruchs 1.

EP 1 868 054 A1 offenbart, umlaufende Nuten in eine zylindrische Bohrung zu fräsen, wobei ein scheibenförmiges Schneidwerkzeug um seine Längsachse rotiert und zugleich auf einer Ringbahn bewegt wird.

Auch aus der US 2 949 064 A ist es bekannt, umlaufende Nuten in eine zylindrische Bohrung zu fräsen, während ein scheibenförmiges Schneidwerkzeug um seine Längsachse rotiert und zugleich auf einer Ringbahn bewegt wird.

Aus der DE 10 2010 054392 A1 ist ein Schneidwerkzeug zur spanenden Bearbeitung eines Werkstücks bekannt. Das Werkzeug weist parallel angeordnete Sägeblätter zum Herstellen von Nuten auf.

Auch aus der DE 10 2011 055210 A1 ist ein Schneidwerkzeug zur spanenden Bearbeitung eines Werkstücks bekannt, das parallel angeordnete Sägeblätter zum Herstellen von Nuten aufweist.

Nachteilig an den bekannten Verfahren ist der erhebliche Zeitaufwand für das Einbringen der Nuten sowie die vergleichsweise geringen Standzeiten der dazu Ausgehend von diesem Stand der Technik lag der Erfindung die Aufgabe zugrunde, die Wirtschaftlichkeit des Beschichtens von Zylinderwänden von Verbrennungsmotoren weiter zu verbessern.

Diese Aufgabe wird durch ein Verfahren gemäß dem unabhängigen Patentanspruch 1 gelöst. Vorteilhafte Ausgestaltungen des erfindungsgemäßen Verfahrens sind Gegenstand der abhängigen Patentansprüche und ergeben sich aus der nachfolgenden Beschreibung der Erfindung.

Ein gattungsgemäßes Verfahren zum Bearbeiten einer Wand eines Zylinders (Zylinderwand) eines Verbrennungsmotors, bei dem umlaufende Nuten in die Zylinderwand spanend eingebracht werden, ist erfindungsgemäß dadurch weitergebildet, dass zum Einbringen der Nuten mindestens ein ringförmiges (vorzugsweise kreisförmiges) Sägeblatt verwendet wird, das an seinem Umfang mit einer Vielzahl von Schneidezähnen versehen ist, wobei das Sägeblatt um seine Längsachse rotierend sowie auf einer Ringbahn (um die Längsachse des Zylinders) bewegt wird, um eine der Nuten in die Zylinderwand einzubringen.

Dabei werden das oder die Sägeblätter auf einer Ringbahn bewegt, die nicht kreisförmig, sondern beispielsweise sternförmig oder auf andere Weise ungleichförmig ist. Dadurch wird eine Variation in der Nuttiefe erzeugt, die durch die dann fehlende Rotationssymmetrie des Nutgrundverlaufs ein Verdrehen der Beschichtung auf der Zylinderwand wirkungsvoll verhindern kann.

Unter dem Begriff "Schneidezähne" sollen beliebige, den zerspanenden Materialabtrag realisierende Schneidelemente verstanden werden, die nicht zwingend einstückig mit einem Grundkörper des Sägeblatts ausgebildet sein müssen und auch nicht zwingend rotationssymmetrisch und/oder in gleichmäßiger Teilung auf dem Umfang des Grundkörpers angeordnet sein müssen.

Durch die Verwendung einer Vielzahl von Schneidezähnen in Verbindung mit den zwei sich überlagernden Bewegungen des ringförmigen Sägeblatts zum Einbringen jeder der Nuten kann die Standzeit des Werkzeug erheblich gegenüber den bekannten Verfahren, bei denen nur eine einzige Schneide oder einige wenige, dann unterschiedliche Nuten herausarbeitende Schneiden eingesetzt werden, erhöht werden.

Das erfindungsgemäße Aufrauen der Zylinderwand kann insbesondere dazu dienen, eine gute Haftung einer nachträglich auf die Zylinderwand aufgebrachten Beschichtungsschicht, die als Lauffläche des Zylinders dient, zu realisieren. Das erfindungsgemäße Verfahren kann demnach in einem nachfolgenden Verfahrensschritt ein Beschichten der Zylinderwand umfassen. Dieses Beschichten kann auf beliebige im Stand der Technik bekannte Art und Weise erfolgen, wobei vorzugsweise ein thermisches Spritzverfahrenen, bei dem der Beschichtungswerkstoff im aufgeschmolzenen Zustand auf die Zylinderwand aufgespritzt wird und dort aushärtet, zum Einsatz kommen kann. Beispiele für thermische Spritzverfahren sind das Lichtbogendrahtspritzen und das Plasmabeschichten.

Um die Haftung der Beschichtung auf der Zylinderwand weiter zu verbessern, kann vorzugsweise vorgesehen sein, dass die zwischen den Nuten ausgebildeten Stege vor dem Beschichten derart umgeformt werden, dass diese (bezüglich der radialen Richtung, ausgehend von der Längsachse des Zylinders) Hinterschnitte ausbilden. Dadurch wird ein Verzahnen der Beschichtungsschicht in der aufgerauten Zylinderwand erreicht, die einer formschlüssigen Verbindung gleichkommt. Zudem kann durch das plastische Verformen der Stege eine Verdichtung des Materials in den Stegen erzielt werden, was erneut einer Verbesserung der Haftung zwischen der Beschichtung und der Zylinderwand zugute kommen kann. Das Verformen der Stege kann symmetrisch und/oder asymmetrisch bezüglich der (radial zur Längsachse des Zylinders verlaufenden) Hochachsen der Stege erfolgen. Das Umformen der Stege kann vorzugsweise mittels eines Rollierwerkzeugs erfolgen. Insbesondere zum Erzeugen asymmetrisch verformter Stege kann vorgesehen sein, ein Rollierwerkzeug einzusetzen, das über dem Umfang und/oder über seiner Länge eine Vielzahl von aus- und einfahrbaren Rollen aufweist, die während des Rolliervorgangs entsprechend aus- und eingefahren werden.

In einer vorteilhaften Ausgestaltung des erfindungsgemäßen Verfahrens kann vorgesehen sein, dass die Breite der Sägezähne der vorgesehenen Nutbreite entspricht. Dadurch kann erreicht werden, dass die Fertigstellung einer Nut in lediglich einer Ringbahnbewegung eines Sägeblatts erfolgen kann. Ein axiales (d.h. in Richtung der Längsachse des Zylinders gerichtetes) Bewegen des Sägeblatts beim Erzeugen der einzelnen Nuten kann dadurch vermieden werden. Es kann jedoch auch vorgesehen sein, dass die Breite aller oder einzelner Nuten größer als die der Sägezähne bzw. des Sägeblatts ist. Insbesondere kann auch vorgesehen sein, dass bei einer Vielzahl von Nuten deren Nutbreiten variieren. Dies kann auch vorgesehen sein, um z.B. bei gleichem Mittenabstand zwischen den einzelnen Nuten die Breiten der zwischen jeweils benachbarten Nuten ausgebildeten Stege zu variieren. Beispielsweise kann vorgesehen sein, dass die Stegbreiten in einem (bezogen auf die Längsachse) mittigen Abschnitt des Zylinders schmaler sind als in einem oder vorzugsweise beiden endseitigen Abschnitten. Dadurch kann erreicht werden, dass in dem durch den Kolben im späteren Betrieb des Verbrennungsmotors besonders belasteten mittigen Abschnitt eine besonders gute Haftung der Beschichtung auf der Zylinderwand erreicht wird, während in den endseitigen Abschnitten eine ausreichende Haftung bei verringertem Bearbeitungsaufwand erzielt wird.

Es besteht auch die Möglichkeit, variierende Stegbreiten bei gleichbleibenden Nutbreiten zu erzielen, indem die Mittenabstände der Nuten über der Länge des Zylinders verändert werden. Auch hier kann vorgesehen sein, dass die Stegbreiten in einem (bezogen auf die Längsachse) mittigen Abschnitt des Zylinders schmaler sind als an einem oder vorzugsweise beiden endseitigen Abschnitten. Selbstverständlich können auch variierende Mittenabstände und variierende Nutbreiten miteinander kombiniert werden.

Um die Bearbeitungszeit für den Zylinder zu verkürzen und um die Standzeit der hierfür eingesetzten Vorrichtung zu verlängern, kann in einer besonders bevorzugten Ausgestaltung des erfindungsgemäßen Verfahrens vorgesehen sein, dass eine Vielzahl (z.B. 5 bis 100) von parallel angeordneten Sägeblättern eingesetzt werden, die durch die (vorzugsweise synchron ablaufende) erfindungsgemäße Überlagerung von zwei Drehbewegungen jeweils eine Nut in die Zylinderwand einbringen. Dadurch können gegebenenfalls in lediglich einem Durchgang (d.h. in einer Ringbahnbewegung eines die Sägeblätter tragenden Werkzeugs) alle vorgesehenen Nuten in die Zylinderwand eingebracht werden.

Es kann jedoch vorteilhaft sein, den Abstand zwischen den Nuten und somit die Breite der zwischen benachbarten Nuten ausgebildeten Stege sehr klein (z.B.: ca. 0,15 mm bis 0,3 mm) zu wählen. In diesem Fall kann die Herstellung eines Werkzeugs, das eine der Anzahl an vorgesehenen Nuten entsprechenden Anzahl an Sägeblättern aufweist, nur sehr aufwändig oder nicht mit der benötigten Haltbarkeit herstellbar sein. Dieses Problem kann vorteilhafterweise dadurch vermieden werden, dass ein Werkzeug eingesetzt wird, dessen Anzahl an Sägeblättern geringer ist (und insbesondere einem ganzzahligen Bruchteil, d.h. der Hälfte, einem Drittel, einem Viertel, etc., entspricht), wobei der Abstand zwischen benachbarten Sägeblättern eines solchen Werkzeugs einem Vielfachen der (im Endzustand der Lauffläche, d.h. nach dem alle vorgesehenen Nuten eingebracht worden sind) vorgesehenen Breite der zwischen den Nuten ausgebildeten Stege beträgt. Sinnvollerweise berechnet sich der Abstand x zwischen den Sägeblättern dabei folgendermaßen: x = n·y + (n-1)·z, wobei n eine ganze Zahl, y die vorgesehene Stegbreite und z die vorgesehene Nutbreite ist. Dabei kann n insbesondere der Anzahl an Durchgängen entsprechen, die zum Einbringen aller Nuten vorgesehen sind.

Zum Einbringen der Nuten kann somit in einem ersten Durchgang eine der Anzahl an Sägeblättern entsprechende Anzahl an Nuten in die Zylinderwand eingebracht werden. Daraufhin können die Sägeblätter (insbesondere ein die Sägeblätter tragendes Werkzeug) um eine Distanz, die der Summe aus vorgesehener Nut- und vorgesehener Stegbreite entspricht, in axialer Richtung in dem Zylinder verfahren werden, um erneute eine entsprechende Anzahl an Nuten einzubringen, die jeweils zwischen zwei zuvor eingebrachten Nuten angeordnet sind. Dies kann fortgesetzt werden, bis die vorgesehene Anzahl an Nuten eingebracht worden ist.

Neben der bevorzugten Ausführungsform, bei der die Nuten mit im Wesentlichen identischem Abstand in die Zylinderwand eingebracht werden, kann auch vorgesehen sein, dass die Abstände zwischen den Nuten und damit die Breiten der Stege variieren.

Die Wirkung des erfindungsgemäßen Verfahrens kann vorteilhafterweise noch verstärkt werden, indem die Nuten in mindestens zwei Durchgängen eingebracht werden, wobei die nicht kreisförmigen Ringbahnen, in denen sich das Sägeblatt in den einzelnen Durchgängen bewegt, nicht identisch sind. Dabei können die nicht kreisförmigen Ringbahnen grundsätzlich unterschiedlich sein und/oder um kleiner oder größer 360° rotatorisch zueinander versetzt sein.

Alternativ oder zusätzlich dazu kann ein Verdrehen der Beschichtung auch dadurch vermieden werden, dass mindestens eine der Nuten nicht oder nicht vollständig umlaufend ausgebildet ist. Beispielsweise kann mindestens eine der Nuten an mindestens einer Stelle unterbrochen sein. Einzelne von mehreren Nuten können auch spiralförmig verlaufen. Ebenso kann mindestens eine sich in Längsrichtung des Zylinders erstreckende Nut vorgesehen sein.

In einer weiterhin bevorzugten Ausgestaltung des erfindungsgemäßen Verfahrens kann vorgesehen sein, dass ein oder mehrere Sägeblätter verwendet werden, bei denen die Spitzen zumindest einiger der Schneidezähne seitlich (d.h. im Übergang zu den Seitenflächen) abgeschrägt oder abgerundet sind. Dadurch kann ein entsprechend abgerundeter oder abgeschrägter Übergang der Seitenwände der Nuten in die Nutgründe erreicht werden. Ein solcher Übergang kann insbesondere dann vorteilhaft sein, wenn die Stege vor dem Beschichten umgeformt werden, da dadurch die Maximalspannung während des Umformens reduziert werden kann. Ein Einreißen der Zylinderwand in den Übergängen kann somit wirkungsvoll verhindert werden.

Die Erfindung wird nachfolgend anhand eines in den Zeichnungen dargestellten Ausführungsbeispiels näher erläutert. Die Zeichnungen zeigen in:
- Fig. 1:: das Einbringen von Nuten in eine Zylinderwand als ein erster Schritt eines nicht erfindungsgemäßen Verfahrens zum Beschichten der Zylinderwand;
- Fig. 2:: eine Draufsicht auf einen Teil des für die Durchführung des Verfahrens gemäß Fig. 1 eingesetzten Systems aus Zylinderkurbelgehäuse und Werkzeug;
- Fig. 3:: eine mit dem erfindungsgemäßen Verfahren erzeugte Ringbahnform, auf der das Werkzeug bewegt werden kann, sowie der sich daraus Verlauf der Nutgründe;
- Fig. 4:: eine alternative Möglichkeit zum Einbringen der Nuten in die Zylinderwand;
- Fig. 5:: ein Rollieren des zuvor mit den Nuten versehenen Zylinders als ein zweiter Schritt des Verfahrens zum Beschichten der Zylinderwand;
- Fig. 6:: die Umformung der zwischen den Nuten ausgebildeten Stege als Ergebnis des Rollierens bei einer ersten Querschnittsform der Nuten;
- Fig. 7:: die Umformung der zwischen den Nuten ausgebildeten Stege als Ergebnis des Rollierens bei einer zweiten Querschnittsform der Nuten;
- Fig. 8:: ein Aufbringen einer Beschichtungsschicht auf die zuvor bearbeitete Zylinderwand als ein dritter Schritt des Verfahrens zum Beschichten der Zylinderwand;
- Fig. 9:: eine gleichgerichtete asymmetrische Umformung der zwischen den Nuten ausgebildeten Stege; und
- Fig. 10:: eine gegenläufige asymmetrische Umformung der zwischen den Nuten ausgebildeten Stege.

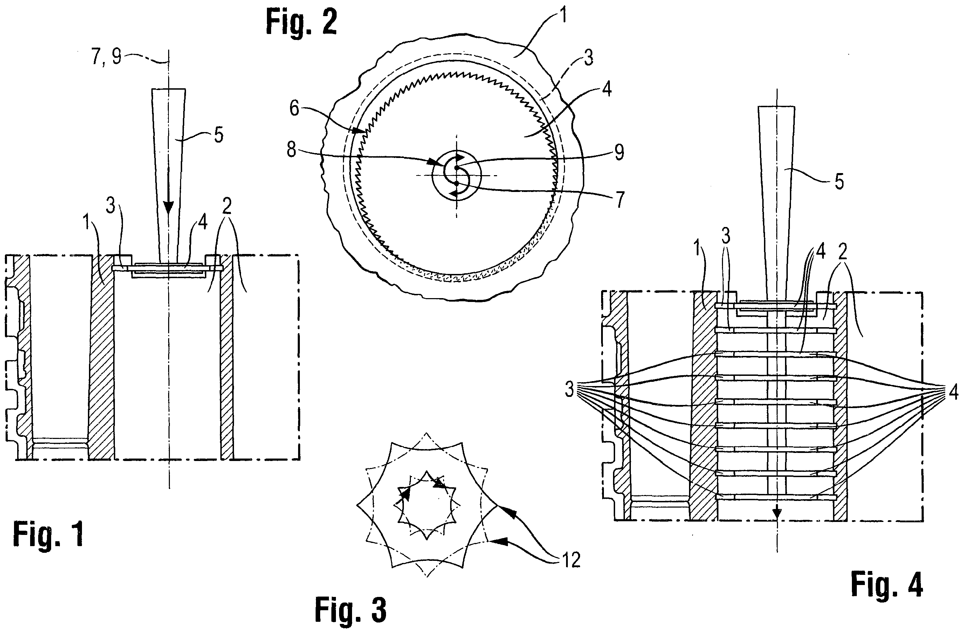

Die Fig. 1 bis 8 zeigen in schematischen Darstellungen verschiedene Schritte eines Verfahrens zum Beschichten einer Wand eines von einem Zylinderkurbelgehäuse 1 ausgebildeten Zylinders 2 sowie Details der dabei eingesetzten Vorrichtungen.

In einem ersten Schritt eines nicht erfindungsgemäßen Verfahrens werden in die Zylinderwand eine Vielzahl von umlaufenden, parallel angeordneten Nuten 3 spanend eingebracht. Hierzu wird ein Werkzeug eingesetzt, das ein oder mehrere kreisförmige Sägeblätter 4 umfasst, die an einem Werkzeugträger 5 befestigt sind. Die Sägeblätter umfassen umfangsseitig eine Vielzahl von Schneidezähnen 6.

Die Fig. 1 zeigt als eine Möglichkeit ein Einbringen aller Nuten 3 mittels eines einzigen Sägeblatts 4. Dieses wird, um die eigene Längsachse 7 rotierend angetrieben, in den Zylinder 2 eingetaucht, bis die gewünschte Position für die erste einzubringende Nut 3 erreicht ist, und dann radial (oder zumindest mit einer radialen Bewegungskomponente) in Richtung der Zylinderwand verfahren. Dabei schneidet das Sägeblatt 4 bis zur gewünschten Nuttiefe in die Zylinderwand ein.

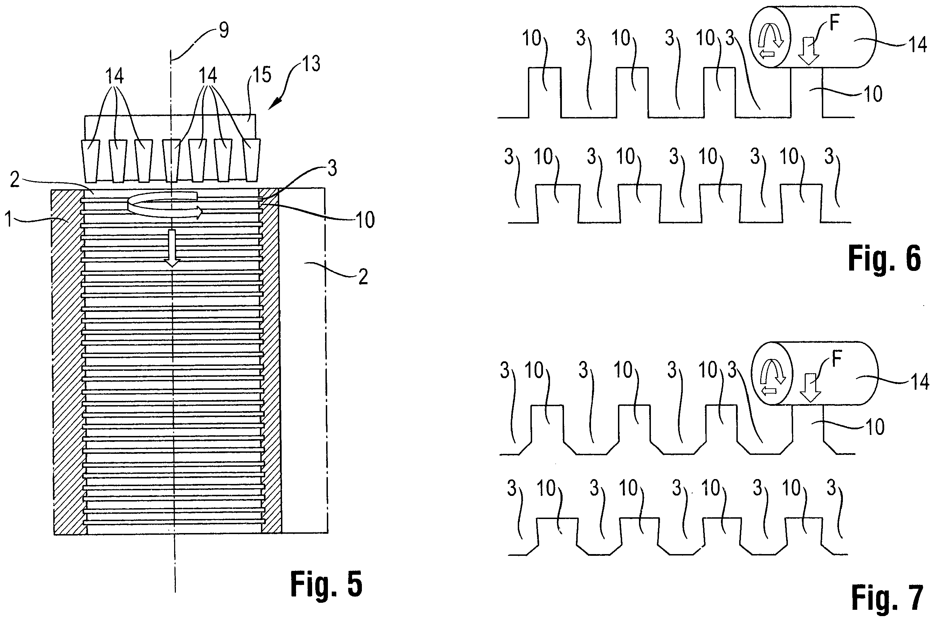

Das Sägeblatt 4 wird daraufhin z.B. auf einer Kreisbahn 8 (vgl. Fig. 2) um die Längsachse 9 des Zylinders 2 bewegt, wodurch die erste Nut 3 mit konstanter Nuttiefe in die Zylinderwand eingebracht wird. Daraufhin wird das Sägeblatt 4 radial auf die Längsachse 9 des Zylinders 2 zu verfahren, um dieses aus der ersten Nut 3 herauszufahren. Durch ein Verfahren des Werkzeugs in Richtung der Längsachse des Zylinders 2 wird das Sägeblatt 4 daraufhin an einer Stelle positioniert, die für das Einbringen einer zweiten Nut 3 vorgesehen ist. In entsprechender Weise wie bei der ersten Nut 3 wird dann die zweite Nut 3 in die Zylinderwand eingebracht. Durch ein schrittweises Verfahren des Werkzeugs entlang der Längsachse 9 des Zylinders können so alle vorgesehen Nuten 3 in die Zylinderwand eingebracht werden (vgl. Fig. 5).

Die Fig. 4 zeigt ein alternatives Vorgehen beim Einbringen der Nuten 3 in die Zylinderwand. Dort wird ein Werkzeug eingesetzt, dass mehrere parallel und koaxial bezüglich ihrer Längsachse angeordnete Sägeblätter 4 umfasst. Dabei ist die Anzahl der Sägeblätter 4 geringer als die vorgesehene Anzahl der Nuten 3 und beträgt insbesondere 1/n (n: ganze Zahl) der vorgesehenen Anzahl der Nuten 3. Weiterhin ist der Abstand zwischen benachbarten Sägeblättern 4 größer als der vorgesehene Abstand zwischen benachbarten Nuten (nachdem alle Nuten eingebracht worden sind). Konkret ist die Summe aus (n-1) multipliziert mit der Nutbreite und n multipliziert mit der vorgesehenen Breite der zwischen benachbarten Nuten 3 ausgebildeten Stege 10 als Abstand zwischen den Sägeblättern 4 vorgesehen.

In einem ersten Durchgang kann somit durch ein Bewegen des Werkzeugs wie bei dem Verfahren gemäß der Fig. 1 eine der Anzahl an Sägeblättern 4 entsprechende Anzahl an Nuten 3 in die Zylinderwand eingebracht werden. Daraufhin wird das Werkzeug um einen Abstand, der der vorgesehenen Stegbreite sowie der Nutbreite entspricht, in Richtung der Längsachse 9 des Zylinders 2 verfahren und dann in einem zweiten Durchgang wiederum eine entsprechende Anzahl an Nuten 3 in die Zylinderwand eingebracht. Der Bearbeitungsdurchgang wird insgesamt n mal wiederholt, bis alle vorgesehenen Nuten 3 eingebracht worden sind.

Sofern das Werkzeug in einer Kreisbahn 8 um die Längsachse 9 des Zylinders 2 verfahren wird, ergibt sich eine Rotationssymmetrie der eingebrachten Nuten 3 und folglich der Außenseite einer auf die Zylinderwand nachträglich aufgebrachten Beschichtungsschicht 11. Ein Verdrehen der Beschichtungsschicht 11 innerhalb des Zylinders 2 würde somit lediglich durch die stoffschlüssige Verbindung zwischen der Beschichtungsschicht 11 und der Zylinderwand verhindert werden. Sollte sich dies als nicht ausreichend zeigen, kann ein Verdrehen der Beschichtungsschicht dadurch verhindert werden, dass gemäß der Erfindung das Werkzeug nicht auf einer Kreisbahn 8 sondern in einer ungleichförmigen Ringbahn 12 um die Längsachse 9 des Zylinders 2 verfahren wird. In der Fig. 3 ist dies beispielsweise für eine sternförmige Ringbahn 12 dargestellt. Das oder die Sägeblätter 4 tauchen demnach in einem Umlauf abschnittsweise unterschiedlich tief in die Zylinderwand ein, wodurch sich ein entsprechend ungleichförmiger Verlauf des oder der Nutgründe ergibt.

Noch weiter verbessern lässt sich die Sicherung gegen Verdrehen, wenn die Ringbahnen 12, die von dem Sägeblatt 4 oder den Sägeblättern 4 in den einzelnen Durchgängen abgefahren werden, rotatorisch versetzt sind, wie dies ebenfalls in der Fig. 3 dargestellt ist. Dort ist für einen ersten Durchgang der Ringbahnverlauf sowie der sich dadurch ergebende Verlauf der Nutgründe in durchgehenden Linien und für einen zweiten Durchgang in gestrichelten Linien dargestellt.

Nach dem Einbringen aller Nuten 3 in die Zylinderwand ist vorgesehen, die zwischen benachbarten Nuten 3 ausgebildeten Stege 10 plastisch umzuformen, um Hinterschnitte beziehungsweise Verengungen der Nutquerschnitte auszubilden, die für eine formschlüssige Fixierung der nachträglich aufzubringenden Beschichtungsschicht 11 auf der Zylinderwand sorgen. Zum Umformen wird ein Rollierwerkzeug 13 eingesetzt, dass eine Mehrzahl von Rollierkörpern 14 aufweist, die umfangsseitig in Vertiefungen eines Grundkörpers 15 angeordnet sind und dabei die Außenseite des Grundkörpers 15 in radialer Richtung überragen. Das rotierend angetriebene Rollierwerkzeug 13 wird entlang der Längsachse 9 des Zylinders 2 verfahren, wobei das Umformen der Stege 10 dadurch realisiert wird, dass der von den Rollierkörpern 14 ausgebildete (größte) Kreisumfang im Durchmesser größer als der von den Stegen 10 ausgebildete Innendurchmesser des Zylinders 2 ist. Ein Eintauchen des Rollierwerkzeugs 13 in den Zylinder 2 wird dabei durch eine leicht konische Ausgestaltung der Rollierkörper 14 ermöglicht.

In den Fig. 6 und 7 ist schematisch die durch das Rollieren erzielbare Änderung der Querschnittsform von sowohl den Stegen 10 als auch den Nuten 3 zu sehen. Im Ausgangszustand im Wesentlichen rechteckige Stege 10 und Nuten 3 erhalten trapezförmige Querschnitte, wobei die Breite der Nuten 3 an der Öffnungsseite größer als im Nutgrund ist.

Bei den in der Fig. 6 dargestellten, rechteckigen Ausgangsquerschnittsformen können beim Umformen in den rechtwinkligen Übergängen von den Seitenflächen der Nuten 3 zu den Nutgründen große Spannungsspitzen auftreten, die zu einem lokalen Einreißen des Materials des Zylinderkurbelgehäuses 1 führen können. Diese Spannungsspitzen können dadurch vermieden oder verringert werden, wenn der Übergang von den Seitenflächen in die Nutgründe weniger spitz vorgesehen ist, z.B. durch angeschrägte (vgl. Fig. 7) oder abgerundete Übergänge. Solche Übergänge können durch eine entsprechende Formgebung für die Schneidezähne 6 der Sägeblätter 4 erreicht werden.

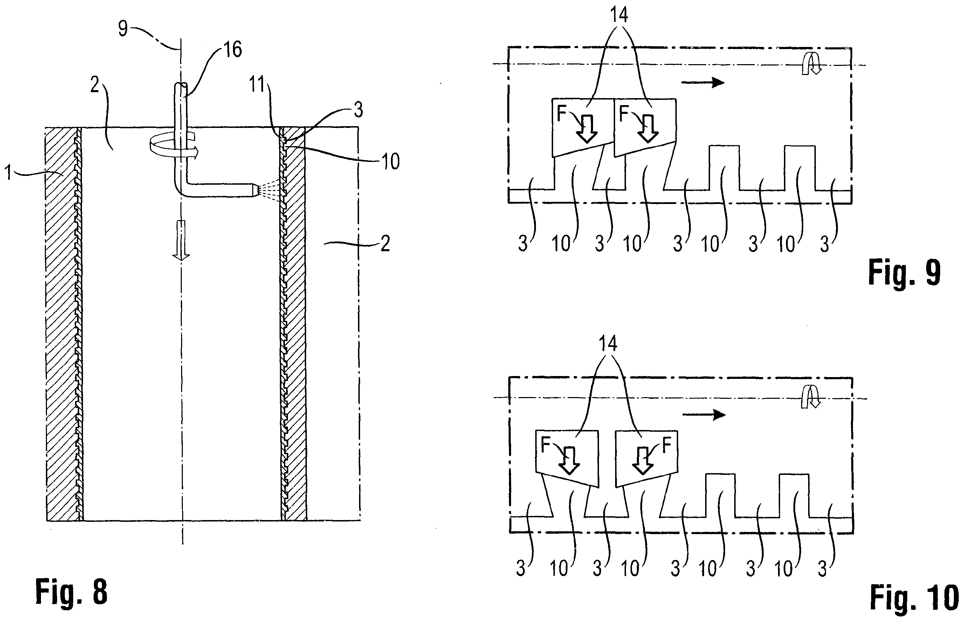

Neben der in den Fig. 6 und 7 dargestellten, symmetrischen Deformation der Stege ist auch eine asymmetrisch Deformation möglich, wie dies beispielsweise in den Fig. 9 und 10 dargestellt ist. Dabei kann sich die gegenläufig asymmetrische Deformation gemäß der Fig. 10 durch eine besonders gute Verbindung der Beschichtungsschicht mit der Zylinderwand auszeichnen.

Für die Ausbildung von ausreichend großen Hinterschnitten bei der Umformung kann ein Verhältnis der Stegbreite zu der Nuttiefe von ca. 1 zu 1 vorteilhaft sein. Dabei kann (jeweils vor der Umformung) die Stegbreite beispielsweise 0,15 mm bis 0,3 mm und die Nuttiefe 0,1 mm bis 0,4 mm betragen.

Nach dem Umformen der Stege 10 wird die Beschichtungsschicht 11 auf die Zylinderwand aufgebracht (vgl. Fig. 8). Diese dient als Lauffläche für einen in dem Zylinder geführten Kolben des Verbrennungsmotors. Die Beschichtung kann insbesondere mittels thermischen Spritzens (z.B. Lichtbogendrahtspritzen) aufgebracht werden, wozu in bekannter Weise ein Spritzkopf 16 rotierend angetrieben und entlang der Längsachse 9 des Zylinders 2 verfahren wird. Das aufgeschmolzene Beschichtungsmaterial kann dabei in die Nuten 3 eindringen, diese ausfüllen und - nach dem Aushärten - die gewünschte formschlüssige Verbindung mit der Zylinderwand ausbilden.

Sofern das Zylinderkurbelgehäuse 1 mehr als einen Zylinder 2 ausbildet, kann vorgesehen sein, mehrere und insbesondere alle Zylinder 2 gleichzeitig erfindungsgemäß zu bearbeiten.

## Patentansprüche

1. Verfahren zum Bearbeiten einer Wand eines Zylinders (2) eines Verbrennungsmotors, wobei umlaufende Nuten (3) in die Wand spanend eingebracht werden, **dadurch gekennzeichnet, dass** zum Einbringen der Nuten (3) mindestens ein ringförmiges Sägeblatt (4) verwendet wird, das an seinem Umfang mit einer Vielzahl von Schneidezähnen (6) versehen ist, wobei das Sägeblatt (4) um seine Längsachse (7) rotierend sowie auf einer Ringbahn (12) bewegt wird, wobei die Ringbahn (12) nicht kreisförmig ist.

2. Verfahren gemäß Anspruch 1, **dadurch gekennzeichnet, dass** die Breite der Schneidezähne (6) der vorgesehenen Breite der Nuten (3) entspricht.

3. Verfahren gemäß Anspruch 1 oder 2, **dadurch gekennzeichnet, dass** eine Vielzahl von parallel angeordneten Sägeblättern (4) eingesetzt wird.

4. Verfahren gemäß Anspruch 3, **dadurch gekennzeichnet, dass** der Abstand zwischen benachbarten Sägeblättern (4) ein Vielfaches der Breite von zwischen den Nuten (3) ausgebildeten Stegen (10) im Endzustand der Wand beträgt.

5. Verfahren gemäß einem der vorhergehenden Ansprüche, **dadurch gekennzeichnet, dass** die Nuten (3) in mindestens zwei Durchgängen eingebracht werden, wobei die nicht kreisförmigen Ringbahnen (12), in denen sich das Sägeblatt (4) in den zwei Durchgängen bewegt, nicht identisch sind.

6. Verfahren gemäß einem der vorhergehenden Ansprüche, **dadurch gekennzeichnet, dass** die Ringbahn (12) sternförmig ist.

7. Verfahren gemäß einem der vorhergehenden Ansprüche, **dadurch gekennzeichnet, dass** die Schneidezähne (6) seitlich abgeschrägt oder abgerundet sind.

8. Verfahren gemäß einem der vorhergehenden Ansprüche, **dadurch gekennzeichnet, dass** die zwischen den Nuten (3) ausgebildeten Stege (10) umgeformt werden, um Hinterschnitte auszubilden

9. Verfahren gemäß Anspruch 8, **dadurch gekennzeichnet, dass** die Stege (10) mittels Rollierens umgeformt werden.

10. Verfahren gemäß einem der vorhergehenden Ansprüche, **dadurch gekennzeichnet, dass** die Wand anschließend beschichtet wird.

## Claims

1. Method for machining a wall of a cylinder (2) of an internal combustion engine, with circumferential grooves (3) being machined into the wall, **characterized in that** at least one annular saw blade (4) which is provided with a large number of cutting teeth (6) on its circumference is used to make the grooves (3), the saw blade (4) being moved so as to rotate about its longitudinal axis (7) and being moved on an annular path (12), the annular path (12) not being circular.

2. Method according to claim 1, **characterized in that** the width of the cutting teeth (6) corresponds to the intended width of the grooves (3).

3. Method according to either claim 1 or 2, **characterized in that** a large number of saw blades (4) arranged in parallel are used.

4. Method according to claim 3, **characterized in that** the distance between adjacent saw blades (4) is a multiple of the width of lands (10) formed between the grooves (3) in the final state of the wall.

5. Method according to any of the preceding claims, **characterized in that** the grooves (3) are made in at least two passes, the non-circular annular paths (12) in which the saw blade (4) moves in the two passes not being identical.

6. Method according to any of the preceding claims, **characterized in that** the annular path (12) is star-shaped.

7. Method according to any of the preceding claims, **characterized in that** the cutting teeth (6) are laterally beveled or rounded.

8. Method according to any of the preceding claims, **characterized in that** the lands (10) formed between the grooves (3) are reshaped in order to form undercuts.

9. Method according to claim 8, **characterized in that** the lands (10) are reshaped by means of roller burnishing.

10. Method according to any of the preceding claims, **characterized in that** the wall is then coated.

## Revendications

1. Procédé d'usinage d'une paroi d'un cylindre (2) d'un moteur à combustion interne, dans lequel des rainures circonférentielles (3) sont pratiquées par enlèvement de matière dans la paroi, **caractérisé en ce qu'**au moins une lame de scie annulaire (4) pourvue d'une pluralité de dents de coupe (6) sur sa circonférence est utilisée pour pratiquer les rainures (3), la lame de scie (4) étant déplacée en rotation autour de son axe longitudinal (7) ainsi que sur une trajectoire annulaire (12), la trajectoire annulaire (12) n'étant pas circulaire.

2. Procédé selon la revendication 1, **caractérisé en ce que** la largeur des dents de coupe (6) correspond à la largeur prévue des rainures (3).

3. Procédé selon la revendication 1 ou 2, **caractérisé en ce qu'**une pluralité de lames de scie (4) disposées en parallèle sont utilisées.

4. Procédé selon la revendication 3, **caractérisé en ce que** la distance entre des lames de scie (4) adjacentes est un multiple de la largeur d'âmes (10) formées entre les rainures (3) dans l'état final de la paroi.

5. Procédé selon l'une des revendications précédentes, **caractérisé en ce que** les rainures (3) sont pratiquées en au moins deux passes, les trajectoires annulaires non circulaires (12) sur lesquelles la lame de scie (4) se déplace lors des deux passes n'étant pas identiques.

6. Procédé selon l'une des revendications précédentes, **caractérisé en ce que** la trajectoire annulaire (12) est en forme d'étoile.

7. Procédé selon l'une des revendications précédentes, **caractérisé en ce que** les dents de coupe (6) sont latéralement biseautées ou arrondies.

8. Procédé selon l'une des revendications précédentes, **caractérisé en ce que** les âmes (10) formées entre les rainures (3) sont mises en forme pour former des contre-dépouilles.

9. Procédé selon la revendication 8, **caractérisé en ce que** les âmes (10) sont mises en forme par roulage.

10. Procédé selon l'une des revendications précédentes, **caractérisé en ce que** la paroi est ensuite revêtue.
